# EUROPÄISCHE PATENTSCHRIFT

(11) **EP 0 695 661 B1**
(45) Veröffentlichungstag und Bekanntmachung des Hinweises auf die Patenterteilung: **24.09.1997**
(21) Anmeldenummer: 95110691.3
(22) Anmeldetag: 08.07.1995
(51) Int. Cl.: B60J 3/02

(54) **Lagervorrichtung, insbesondere für schwenkbar gelagerte Sonnenblenden von Fahrzeugen**
Hinge assembly, especially for tiltable vehicular sun visors
Dispositif de palier, notamment pour pare-soleil basculant de véhicules

(30) Priorität: 03.08.1994 DE 4427445
(43) Veröffentlichungstag der Anmeldung: 07.02.1996
(73) Patentinhaber: BECKER GROUP EUROPE GmbH, 42285 Wuppertal (DE)
(72) Erfinder: Welter, Patrick, FR-57730 La Chambre (FR)

(56) Entgegenhaltungen:
- DE-A- 3 402 416
- FR-A- 2 264 675
- FR-A- 2 495 066

## Beschreibung

Die Erfindung bezieht sich auf eine Lagervorrichtung, insbesondere für schwenkbar gelagerte Sonnenblenden von Fahrzeugen, mit einer Achse, deren einer Endabschnitt mit dem Fahrzeug verbindbar ist und um deren anderen, in einem Lagerkörper des aus Schaumkunststoff bestehenden Sonnenblendenkörpers einsetzbaren Endabschnitt der Sonnenblendenkörper zwischen einer ersten und einer zweiten Endstellung schwenkbar ist und mit einer eine Feder aufweisenden Rasteinrichtung, welche den Sonnenblendenkörper in zumindest einer Stellung des Schwenkbereichs kraftschlüssig mit der Achse verrastet und in ihrem Verstellbereich ein bei einer Verstellung zu überwindendes Moment erzeugt.

Die DE-25 51 633 C2 zeigt ein Lager für einen Sonnenblendenkörper mit einer U-förmig gebogenen Blattfeder zwischen deren Schenkeln die Achse der Lagervorrichtung, auf welche der Sonnenblendenkörper schwenkbar gelagert ist, eingeklemmt ist. Zur Bildung einer Rasteinrichtung ist die Achse mit Abflachungen versehen, an welchen die Feder in Raststellung mit ihren Schenkeln anliegt. Die Feder ist relativ groß und zudem relativ aufwendig und teuer in der Herstellung. Ein besonderer Nachteil besteht darin, daß das herkömmliche Lager nur mit äußerst hohem Aufwand aus dem Sonnenblendenkörper entfernt werden kann, was aber erforderlich ist, wenn die Einzelteile der Sonnenblende einer Wiederverwertung zugeführt werden sollen.

Der Erfindung liegt nun ausgehend von einer Lagervorrichtung der eingangs genannten Art die Aufgabe zugrunde, Vorsorge dafür zu treffen, daß diese bei besonders einfacher und kostengünstiger Herstellbarkeit problemlos zu montieren und ebenso problemlos zwecks sortenreiner Trennung der Einzelteile zu demontieren ist.

Zur Lösung dieser Aufgabe ist erfindungsgemäß vorgesehen, daß der Lagerkörper einstückig in einem im Sonnenblendenkörper eingelagerten als Kunststoff-Spritzgußteil ausgebildeten Verstärkungskörper angeformt ist, eine Lagerbohrung mit zumindest einer radialen, sich axial erstreckenden rinnenförmigen Erweiterung aufweist und aus zwei Lamellenreihen gebildet ist, wobei jede Lamellenreihe zwei oder mehr etwa halbkreisförmig ausgebildete Einzellamellen aufweist, die in Reihe nebeneinander und mit einem solchen Abstand zueinander angeordnet sind, daß die Lamellen jeder Lamellenreihe die Lücken der jeweils anderen Lamellenreihe ausfüllen, daß der in die Lagerbohrung eingesetzte Endabschnitt der Achse mit einer sich axial erstreckenden Nut mit geschlossenen Stirnenden und nach außen divergierenden Nutwänden ausgebildet ist und daß in die Nut die deren Länge angepaßte Feder mit Vorspannung eingesetzt ist, die aus Federstahlblech besteht und einen U-förmigen Querschnitt mit zu den freien Enden hin konvergierenden, sich an den Nutwänden abstützenden Schenkeln aufweist.

Die erfindungsgemäße Lagervorrichtung besteht aus nur wenigen, äußerst einfach und kostengünstig herzustellenden Teilen und ist zudem schnell und einfach zu montieren und insbesondere auch zu demontieren, weil für letzteres lediglich die Achse zusammen mit der von ihr aufgenommenen Feder aus dem Lagerkörper herauszuziehen ist. Der Sonnenblendenkörper, der vollkommen aus Kunststoffmaterial bestehen kann, ist hiernach ohne weiteres der Wiederverwertung zuführbar. Die Maßnahme, den Lagerkörper aus Lamellenreihen zu bilden bringt noch den besonderen Vorteil, daß für die Herstellung desselben bzw. gesamten Verstärkungskörpers Spritzgußwerkzeuge ohne aufwendige Schieber eingesetzt werden können.

Ein Ausführungsbeispiel der Erfindung wird im folgenden anhand der Zeichnungen naher erläutert, und es zeigen:
- Fig. 1: eine bereichsweise freigelegte Ansicht einer Sonnenblende für Fahrzeuge mit Lagervorrichtung,
- Fig. 2: die Sonnenblende nach Fig. 1 in einer schaubildlichen Explosivdarstellung,
- Fig 3: einen Schnitt A - A nach Fig. 2,
- Fig. 4: einen Schnitt B - B nach Fig. 2 in einer Gebrauchslage der Sonnenblende,
- Fig. 5: den Schnitt B - B nach Fig. 2 in einer Nichtgebrauchs- bzw. Rastlage der Sonnenblende,
- Fig. 6: eine Einzelheit der Sonnenblende in perspektivischer Ansicht und
- Fig. 7: eine Draufsicht auf die Einzelheit nach Fig. 6.

Die Sonnenblende besteht aus einem Sonnenblendenkörper 1 mit einem Kern 2 aus Schaummaterial, vorzugsweise expandiertem Polypropylen, einem im Kern 2 eingebetteten Verstärkungskörper 3 und einer Hülle 4, bei der es sich bevorzugt um eine TPO-Folie handelt. Zur schwenk- und klappbaren Befestigung an einer nichtgezeigten Fahrzeugkarosserie dient eine im Sonnenblendenkörper 1 mit einem Endabschnitt in einen Lagerkörper 5 angeordnete Achse 6, deren anderer Endabschnitt unter Zwischenschaltung eines Böckchens 7 an der Fahrzeugkarosserie befestigbar ist. Am entgegengesetzten Ende des Sonnenblendenkörpers 1 ist eine Gegenlagerachse 8 angeordnet, die zum lösbaren und drehbaren Einhängen in ein nichtgezeigtes Gegenlagerböckchen an der Fahrzeugkarosserie dient. Der im Sonnenblendenkörper 1 gelagerte Schenkel der L-förmig ausgebildeten Achse 6 und die Gegenlagerachse 8 verlaufen fluchtend entlang eines Randbereichs des Sonnenblendenkörpers 1 und bilden die Achse beim Herunterklappen der Sonnenblende gegen eine Windschutzscheibe, um sie von der Nichtgebrauchslage im Bereich des Dachhimmels in die Gebrauchslage im Bereich der Windschutzscheibe zu bewegen. Der Sonnenblendenkörper 1 läßt sich auch gegen ein Seitenfenster verschwenken, in dem die Gegenlagerachse 8 aus dem Gegenlagerböckchen ausgehängt und um den im Böckchen 7 gelagerten Schenkel der Achse 6 gegen das Seitenfenster geschwenkt wird.

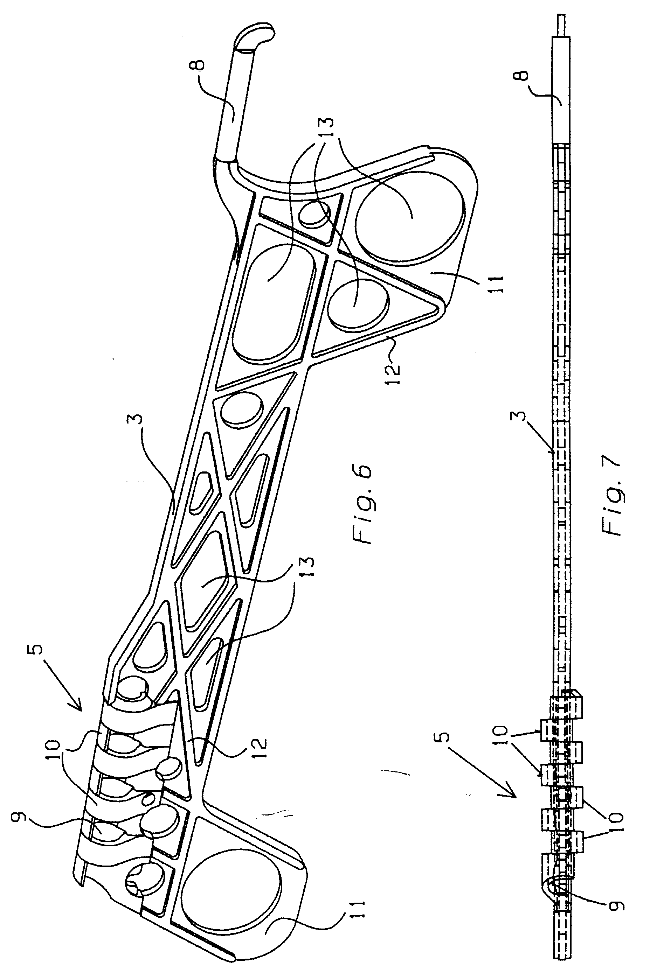

An dem Verstärkungskörper 3, der als Kunststoffspritzling aus vorzugsweise Polypropylen ausgebildet ist, ist der Lagerkörper 5 einstückig angeformt. Der Lagerkörper 5 weist eine Lagerbohrung 9 und die Besonderheit auf, daß er aus zwei Lamellenreihen gebildet ist, wobei jede Lamellenreihe zwei oder mehr, etwa halbkreisförmig ausgebildete Einzellamellen 10 aufweist. Beim Ausführungsbeispiel besitzt jede Lamellenreihe, wie es auch vorzugsweise vorgesehen ist, jeweils vier Einzellamellen 10. Die Einzellamellen 10 sind in Reihe nebeneinander und mit einem solchen Abstand zueinander angeordnet, daß die Lamellen 10 jeder Lamellenreihe die Lücken der jeweils anderen Lamellenreihe ausfüllen, wie dies besonders deutlich in Fig. 6 und 7 gezeigt ist. die Lamellen 10 umgreifen die durch sie gebildete Lagerbohrung 9 von links und rechts her um jeweils mehr als 180 °, jedoch läuft die innenseitige Wandungsfläche der Lamellen 10 nach exakt 180 ° von der Lamellenwurzel aus gesehen tangential aus, was zum Zwecke eines problemlosen, schieberfreien Entformens des gesamten Verstärkungskörpers 3 vorgesehen ist. Der Lagerkörper 4 weist eine Lagerbohrung 9 mit einer radialen, sich axial über die gesamte Länge desselben erstreckenden rinnenförmigen Erweiterung 14 auf.

Der mit dem Lagerkörper 5 eine einstückige Einheit bildende Verstärkungskörper 3 erstreckt sich nahezu über die gesamte Länge des Sonnenblendenkörpers 1, in dessen oberen Bereich er eingelagert ist, um durch angeformte Lappen 11 eine Verbindunssteifheit des Sonnenblendenkörpers 1 zu bewirken. Am Verstärkungskörper 3 ist zudem die Gegenlagerachse 8 einstückig angeformt. Um zum einen bei hoher Stabilität eine Materialeinsparung und zum anderen eine gute Verankerung im Kern 2 zu erreichen, ist der Verstärkungskörper 3 mit Rippen 12 und Durchbrüchen 13 ausgebildet.

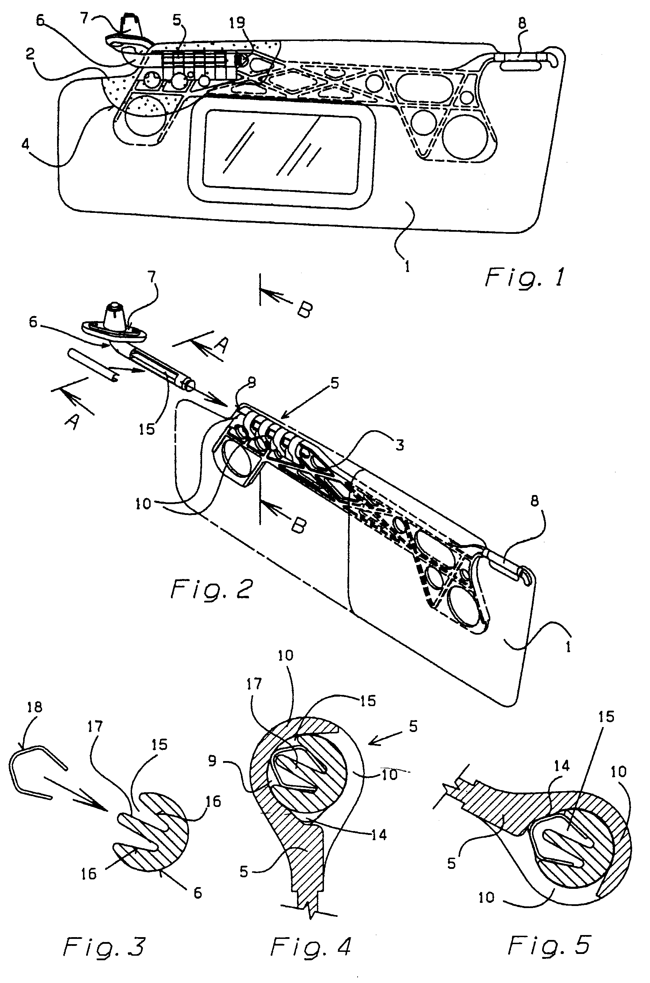

Die Achse 6 weist an ihrem in die Lagerbohrung 9 des Lagerkörpers 5 eingesetzten Endabschnitt eine sich axial erstreckende Nut 15 mit geschlossenen Stirnenden und nach außen divergierenden Nutwänden 16 auf. Die Länge der Nut 15 entspricht etwa der Länge des Lagerkörpers 5. Die Nut 15 ist durch einen, von ihrem Boden ausgehenden Nocken 17, der sich über die Nutlänge erstreckt und in die Stirnenden derselben übergeht, geteilt. Die Nut 15 dient zur Aufnahme einer Feder 18, die als längliches Stanzprägeteil aus Federstahlblech ausgebildet ist, einen U-förmigen Querschnitt mit zu den freien Enden hin konvergierenden, sich an den Nutwänden abstützenden Schenkeln und einen Steg aufweist, der mit einer axial durchlaufenden Abbiegung versehen ist, die dem Steg eine satteldachartige, in die rinnenförmige Erweiterung 14 der Lagerbohrung 9 des Lagerkörpers 5 passende Form verleiht. Die Feder 18 wird um so mehr gespannt, je tiefer sie in die Nut 15 hineingedrückt wird. Fig. 4 zeigt die Wirkstellung der durch den Nocken 17 abgestützten Feder 18 über den Schwenkbereich des Sonnenblendenkörpers 1 und Fig. 5 zeigt die Feder 18 in der Raststellung des Sonnenblendenkörpers 1, die vorzugsweise mit der Nichtgebrauchslage des Sonnenblendenkörpers 1 am Dachhimmel zusammenfällt. Die Feder 18 bewirkt eine Reibkraft, die ausreicht, um den Sonnenblendenkörper 1 in jeder Schwenkstellung zu halten.

Die Achse 6 kann am freien Ende mit einer pilzkopfartigen Verdickung 19 versehen sein, um zu verhindern, daß sie ungewollt aus dem Lagerkörper 5 herausgezogen werden kann. Der Pilzkopf soll die Demontage lediglich erschweren, nicht aber verhindern.

## Patentansprüche

1. Lagervorrichtung, insbesondere für schwenkbar gelagerte Sonnenblenden von Fahrzeugen, mit einer Achse (6), deren einer Endabschnitt mit dem Fahrzeug verbindbar ist und um deren anderen, in einem Lagerkörper (5) des aus Schaumkunststoff bestehenden Sonnenblendenkörpers (1) einsetzbaren Endabschnitt der Sonnenblendenkörper (1) zwischen einer ersten und einer zweiten Endstellung schwenkbar ist und mit einer eine Feder (18) aufweisenden Rasteinrichtung, welche den Sonnenblendenkörper (1) in zumindest einer Stellung des Schwenkbereichs kraftschlüssig mit der Achse (6) verrastet und in ihrem Verstellbereich ein bei einer Verstellung zu überwindendes Moment erzeugt, dadurch gekennzeichnet, daß der Lagerkörper (5) einstückig an einem im Sonnenblendenkörper (1) eingelagerten als Kunststoff-Spritzgußteil ausgebildeten Verstärkungskörper (3) angeformt ist, eine Lagerbohrung (9) mit zumindest einer radialen, sich axial erstreckenden rinnenförmigen Erweiterung aufweist und aus zwei Lamellenreihen gebildet ist, wobei jede Lamellenreihe zwei oder mehr etwa halbkreisförmig ausgebildete Einzellamellen (10) aufweist, die in Reihe nebeneinander und mit einem solchen Abstand zueinander angeordnet sind, daß die Lamellen (10) jeder Lamellenreihe die Lücken der jeweils anderen Lamellenreihe ausfüllen, daß der in die Lagerbohrung (9) eingesetzte Endabschnitt der Achse (6) mit einer sich axial erstreckenden Nut (15) mit geschlossenen Stirnenden und nach außen divergierenden Nutwänden (16) ausgebildet ist und daß in die Nut (15) die deren Länge angepaßte Feder (18) mit Vorspannung eingesetzt ist, die aus Federstahlblech besteht und einen U-förmigen Querschnitt mit zu den freien Enden hin konvergierenden, sich an den Nutwänden (16) abstützenden Schenkeln aufweist.

## Claims

1. Bearing device in particular for pivotably mounted sun visors of vehicles, having a spindle (6), one end section of which can be connected to the vehicle, and it being possible for a sun-visor body (1) to be pivoted, between a first end position and a second end position, about the other end section of said spindle, which other end section can be inserted into a bearing body (5) of the sun-visor body (1), which consists of foamed plastic and having a latching device which has a spring (18), latches the sun-visor body (1) in a frictionally locking manner with the spindle (6) in at least one position of the pivot region, and produces, in its adjustment region, a torque which has to be overcome in the event of an adjustment, characterized in that the bearing body (5) is integrally formed on a reinforcing body (3), incorporated in the sun-visor body (1) and designed as a plastic injection moulding, has a bearing bore (9) with at least one radial, axially extending, channel-like widened portion and is formed from two rows of lamellae, each row of lamellae having two or more approximately semicircular individual lamellae (10) which are arranged in a row one beside the other and are spaced apart from one another by such a distance that the lamellae (10) of each row of lamellae fill the gaps in the respectively other row of lamellae, in that that end section of the spindle (6) which is inserted into the bearing bore (9) is designed with an axially extending groove (15) which has closed ends and outwardly diverging groove walls (16), and in that the groove (15) has inserted into it, with prestressing, the spring (18), which is adapted in length to said groove, consists of spring steel plate and has a U-shaped cross-section with legs which converge towards the free ends and are supported on the groove walls (16).

## Revendications

1. Dispositif de palier, notamment pour pare-soleil basculant de véhicule, comprenant un axe (6) dont une extrémité peut être reliée au véhicule tandis que cet axe peut basculer entre une première et une seconde position finale, par rotation autour de son autre extrémité qui peut être introduite dans un corps de palier (5) appartenant au corps du pare-soleil (1) constitué de mousse en matière plastique et avec un dispositif d'arrêt comportant un ressort (18) pour enclencher une liaison par la force sur l'axe (6) le corps de pare-soleil (1) dans au moins une position de sa plage de basculement, tout en fournissant, à l'intérieur de sa plage de réglage, un couple qu'il faut surmonter pour effectuer un réglage,
caractérisé en ce que
pour atteindre cet objectif, l'invention propose de donner au dispositif de palier les caractéristiques suivantes :
- le corps de palier (5) est constitué d'une seule pièce moulée sous la forme d'une pièce de renforcement, réalisée en plastique par injection et logée dans le corps (1) du pare-soleil,
- un alésage de palier (9) présente au moins un élargissement radial, en forme de rigole, s'étendant axialement et constitué de deux rangées de lamelles, dont chacune comporte au moins deux lamelles individuelles (10) ou plus en forme de demi-cercle, se suivant en série avec un espacement entre elles tel que les lamelles (10) de chaque rangée occupent les intervalles entre les lamelles de l'autre rangée,
- l'extrémité de l'axe, engagée dans l'alésage de palier (9), présente une rainure (15) s'étendant axialement, dont les extrémités frontales sont fermées et dont les parois (16) divergent vers l'extérieur,
- dans la rainure précédente (15), est logé sous tension le ressort (18) de longueur adaptée à celle de la rainure, ce ressort étant fait d'une lame d'acier et présentant une section en forme de U dont les branches, en appui sur les parois (16) de la rainure, ont leurs extrémités libres convergentes.
